# EUROPEAN PATENT APPLICATION

(11) **EP 2 096 477 A1**
(43) Date of publication of application: **02.09.2009**
(21) Application number: 09002684.0
(22) Date of filing: 25.02.2009
(51) Int. Cl.: G02B 7/08, G02B 13/00

(54) **Lens driving apparatus and camera module**

(30) Priority: 28.02.2008 JP 2008047322; 10.03.2008 JP 2008059397
(71) Applicant: Mitsumi Electric Co., Ltd., Tama-shi, Tokyo 206-8567 (JP)
(72) Inventor: Honma, Toshihiko, Tama-shi Tokyo 206-8567 (JP)
(74) Representative: Grünecker, Kinkeldey, Stockmair & Schwanhäusser Anwaltssozietät

(57) **Abstract**

A lens driving apparatus (10) is provided. A lens holder (14) has a cylindrical portion (140) adapted to hold a lens assembly. A driving coil (16) is fixed to the lens holder so as to be positioned in a circumference of the cylindrical portion. A yoke (20) has a permanent magnet (18) opposed to the driving coil. An upper plate spring (22) and a lower plate spring (24) are provided on both sides of the cylindrical portion of the lens holder in an optical axis direction of the cylindrical portion and movably supporting the lens holder in the optical axis direction in a state where the lens holder is positioned in a radial direction of the cylindrical portion. Each of the upper plate spring and the lower plate spring has an inner peripheral end (222;242) attached to the lens holder and an outer peripheral end (224;244) attached to the yoke. A base (12) is attached with the yoke and sandwiches the outer peripheral end (244) of the lower plate spring between the yoke and the base. A sheet-shaped electrode (32) is disposed between the lower plate spring and the base and operable to supply a power to the driving coil. The sheet-shaped electrode has an electrode portion (322) which is electrically connected to a pair of drawn wires (162) of the driving coil; and an extension portion (324) which extends downward from the electrode portion and has a pair of lens driving terminals (324a) formed at a front end thereof. The base is monolithically formed with a guide (122) which protrudes downward and has a through-hole (122a) through which the extension portion is inserted. The pair of lens driving terminals is exposed from a lower end of the guide.

## Description

### BACKGROUND

The present invention relates to a lens driving apparatus and a camera module, and more particularly, to an auto-focus lens driving apparatus and a camera module used for a small-sized portable camera.

A smah-sized portable camera is mounted to a cellular phone equipped with a camera. In the small-sized portable camera, an auto-focus lens driving apparatus is used. In the past, various auto-focus lens driving apparatuses have been proposed.

For example, Patent Document 1 (Figs. 2, 3, and 4) discloses a cellular phone equipped with a camera capable of reducing a time required for an auto-focus operation. The cellular phone equipped with the camera (lens driving apparatus) disclosed in Patent Document 1 includes a holder (lens holder) which includes a cylindrical portion having one end attached with a lens (a lens assembly and a barrel), a driving coil which is fixed to the holder (lens holder) so as to be positioned in a circumference of the cylindrical portion of the holder, a yoke which includes a permanent magnet opposed to the driving coil, and a pair of plate springs which is provided on both sides of the cylindrical portion of the holder (lens holder) in an optical axis direction and supports the holder (lens holder) so as to be displaceable in the optical axis direction in the state where the holder is positioned in a radial direction. When a current is supplied to the driving coil, an interaction occurs by a magnetic field of the permanent magnet and a magnetic field formed by the current flowing through the driving coil, thereby adjusting the position of the lens (lens assembly) in the optical axis direction. Among the pair of plate springs, one is called as an upper plate spring (front spring), and the other is called as a lower plate spring (rear spring). An inner peripheral end of the upper plate spring (front spring) is sandwiched between the upper end (front end) of the holder and the stopper so as to be fitted to the holder (lens holder).

An actuator (lens driving apparatus) disclosed in Patent Document 1 is provided on the outside of the lower plate spring in the optical axis direction, and further includes an actuator base which sandwiches the lower plate spring between the actuator base and an end surface of the yoke in the optical axis direction and a sheet-shaped electrode which is disposed between the lower plate spring and the actuator base so as to supply a power to the driving coil. The sheet-shaped electrode includes a ring-shaped portion (electrode portion) which is formed of a polyimide sheet material so as to have a circular ring shape and an extension portion which extends outward in a radial direction from the ring-shaped portion. The extension portion extends to the-outside of the actuator base via a through-hole of the actuator base. The extension portion is connected to a substrate and carries out a function of supplying a current to the driving coil. When a front end of a pair of drawn wires of the driving coil is soldered to a terminal portion formed in the ring-shaped portion of the sheet-shaped electrode, it is possible to supply a power to the driving coil.

Further, the camera module disclosed in Patent Document 1 includes a substrate, an imaging element which is placed on the substrate, an electronic component which is spaced from the imaging element and is placed on the substrate, a sealing member which forms a closed space, used for sealing the imaging element and the electronic component, in combination with the substrate, and the actuator which is placed on the sealing member.
Patent Document 1: Japanese Patent Publication No. 2006-258969A

In Patent Document 1, the extension portion of the sheet-shaped electrode extends to the outside of the actuator base via a through-hole of the actuator base. Accordingly, it is necessary to draw out the extension portion of the sheet-shaped electrode to a position between the through-hole and the substrate. In order to avoid the drawing-out operation, a guide is provided. However, in the structure in which the guide is separated from the actuator base, as disclosed in Fig. 3 of Patent Document 1, the number of components is increased. Additionally, in Patent Document 1, it is described that the extension portion- of the sheet shaped electrode is connected to the substrate, but the connection method is not explicitly described.

### SUMMARY

It is therefore an object of the present invention to provide a lens driving apparatus and a camera module capable of decreasing the number of components and of reliably connecting a lens driving terminal to a substrate so as to be electrically connected to each other.

The other objects of the invention will be apparent according to the following description.

In order to achieve the object, according to an aspect of at least one embodiment of the present invention, there is provided a lens driving apparatus comprising: a lens holder having a cylindrical portion adapted to hold a lens assembly; a driving coil fixed to the lens holder so as to be positioned in a circumference of the cylindrical portion; a yoke having a permanent magnet opposed to the driving coil; and an upper plate spring and a lower plate spring provided on both sides of the cylindrical portion of the lens holder in an optical axis direction of the cylindrical portion and movably supporting the lens holder in the optical axis direction in a state where the lens holder is positioned in a radial direction of the cylindrical portion, wherein each of the upper plate spring and the lower plate spring has an inner peripheral end attached to the lens holder and an outer peripheral end attached to the yoke; wherein the lens driving apparatus further comprises: a base which is attached with the yoke and sandwiches the outer peripheral end of the lower plate spring between the yoke and the base; and a sheet-shaped electrode which is disposed between the lower plate spring the base and operable to supply a power to the driving coil; wherein the sheet-shaped electrode has an electrode portion which is electrically connected to a pair of drawn wires of the driving coil; and an extension portion which extends downward from the electrode portion and has a pair of lens driving terminals formed at a front end thereof; wherein the base is monolithically formed with a guide which protrudes downward and has a through-hole through which the extension portion is inserted; and wherein the pair of lens driving terminals is exposed from a lower end of the guide.

According to another aspect of at least one embodiment of the present invention, there is provided a camera module comprising: the above lens driving apparatus; an imaging element; and a substrate on which the lens driving apparatus and the imaging elements are mounted, wherein the substrate is formed with a conductive pattern which is electrically connected to the pair of lens driving terminals via a conductive resin.

The camera module may further comprise a heat radiation resin which is applied to the conductive resin. The camera module may further comprise a conductive plate which covers the heat radiation resin. The camera module may further comprise a conductive plate which is spaced apart from the conductive resin and covers the conductive resin. The lens driving apparatus may be formed into a substantially rectangular parallelepiped shape and the substrate may be formed into a rectangular shape in correspondence to the rectangular parallelepiped shape.

With the above configuration, it is possible to decrease the number of components and reliably electrically connect a lens driving terminal to a substrate.

### BRIEF DESCRIPTION OF THE DRAWINGS

The above and other aspects of the present invention will become more apparent by describing in detail exemplary embodiments thereof with reference to the accompanying drawings, wherein:
Fig. 1 is an external perspective view showing a lens driving apparatus according to a first embodiment of the invention when obliquely viewed from the upside;
Fig. 2 is an external perspective view showing the lens driving apparatus shown in Fig. 1 when obliquely viewed from the downside;
Fig. 3 is an exploded perspective view showing the lens driving apparatus shown in Fig. 1;
Fig. 4 is an external perspective view showing a camera module having the lens driving apparatus shown in Fig. 1 when obliquely viewed from the upside;
Fig. 5 is a cross-sectional view magnifying an electric connection portion (contact point portion) of a lens driving terminal shown in Fig. 4;
Fig. 6 is a cross-sectional view magnifying an electric connection portion (contact point portion) of a lens driving terminal according to a second embodiment of the invention; and
Fig. 7 is a cross-sectional view magnifying an electric connection portion (contact point portion) of a lens driving terminal according to a third embodiment of the invention.

### DETAILED DESCRIPTION OF EXEMPLARY EMBODIMENTS

Hereinafter, exemplary embodiments of the invention will be described with reference to the accompanying drawings.

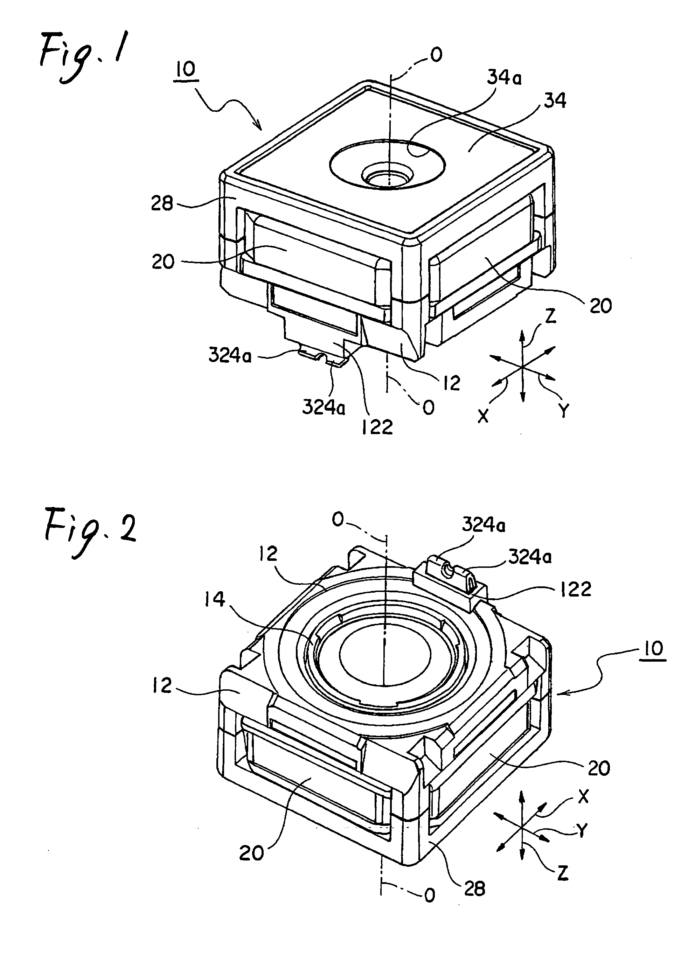

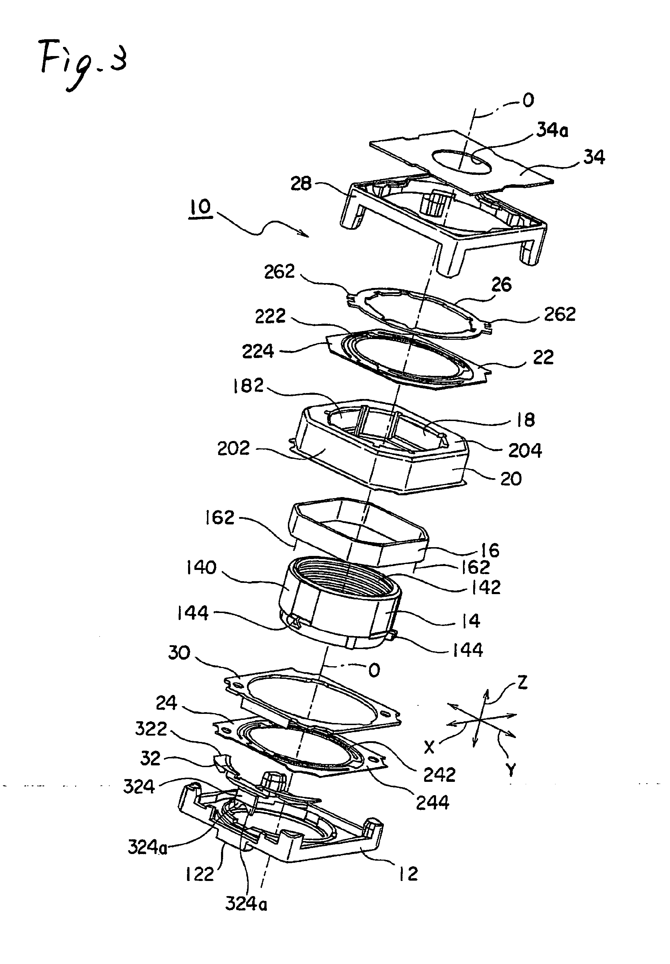

A lens driving apparatus 10 according to the embodiments of the invention will be described with reference to Figs. 1 to 3. Fig. 1 is an external perspective view showing a lens driving apparatus 10 when obliquely viewed from the upside. Fig. 2 is an external perspective view showing the lens driving apparatus 10 when obliquely viewed from the downside. Fig. 3 is an exploded perspective view showing the lens driving apparatus 10. Here, as shown in Figs. 1 to 3, an orthogonal coordinate system (X, Y, and Z) is used. In the orthogonal coordinate system (X, Y, and Z) shown in Figs. 1 to 3, the X axis indicates a longitudinal direction (depth direction), the Y axis indicates a traverse direction (width direction), and the Z axis indicates a vertical direction (height direction). Then, in the examples shown in Figs. 1 to 3, the vertical direction Z corresponds to a direction of an optical axis O of the lens.

However, at an actual use time, the longitudinal direction corresponds to the direction of the optical axis O, that is, the vertical direction Z. In other words, an upward direction of the Z axis corresponds to a forward direction, and a downward direction of the Z axis corresponds to a backward direction.

The lens driving apparatus 10 shown in the drawings is provided in a cellular phone equipped with an auto-focus camera. The lens driving apparatus 10 is used to move a lens assembly (barrel) (not shown) in the direction of the optical axis O. The lens driving apparatus 10 includes an actuator base 12 disposed in the lower side of (in rear of) the Z-axis direction (the direction of the optical axis O). A lower portion (rear portion) of the actuator base 12 is provided with an imaging element (not shown) disposed on a substrate. The imaging element picks up a subject image formed by the lens assembly and converts the pick-up image into an electrical signal. The imaging element is formed by, for example, a CCD (charge coupled device) type image sensor, a CMOS (complementary metal oxide semiconductor) type image sensor, or the like. Accordingly, a camera module is formed by the combination of the lens driving apparatus 10, the substrate, and the imaging element.

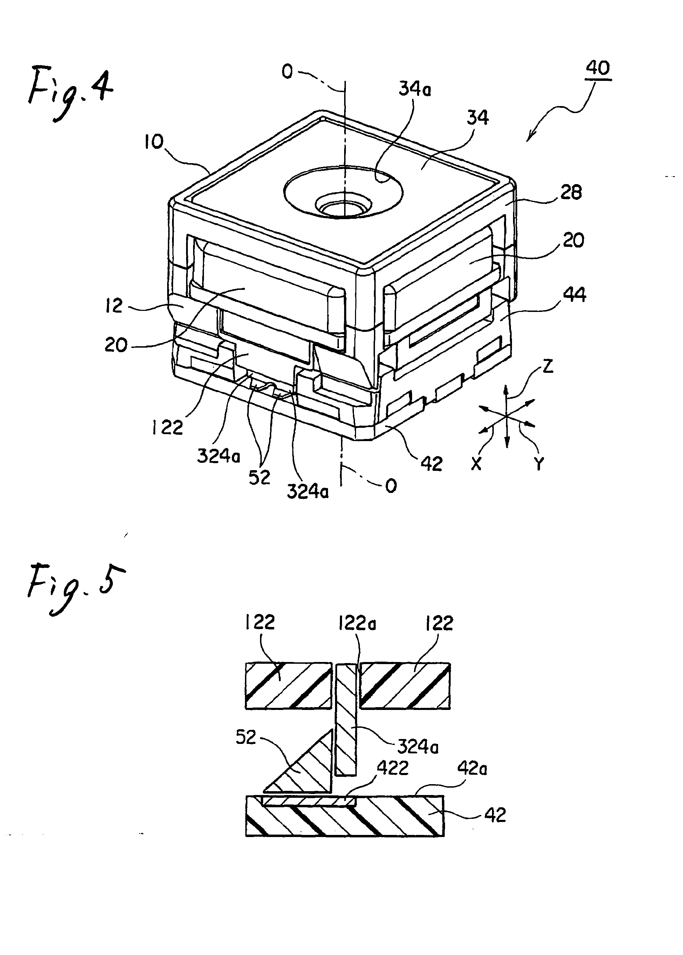

Additionally, the camera module will be described later in detail with reference to Fig. 4.

The lens driving apparatus 10 includes a lens holder 14 which includes a cylindrical portion 140 for holding the lens assembly (barrel), a driving coil 16 which is fixed to the lens holder 14 so as to be positioned in a circumference of the cylindrical portion 140, a yoke 20 which includes a permanent magnet 18 opposed to the driving coil 16, and a pair of plate springs 22 and 24 provided on both sides of the cylindrical portion 140 of the lens holder 14 in the direction of the optical axis O. The pair of plate springs 22 and 24 supports the lens holder 14 so as to be displaceable in the direction of the optical axis O in the state where the lens holder 14 is positioned in a radial direction. Among the pair of plate springs 22 and 24, one plate spring 22 is called as an upper plate spring, and the other plate spring 24 is called as a lower plate spring.

Additionally, as described above, at an actual use time, the upward direction of the Z axis (the direction of the optical axis O) corresponds to the forward direction and the downward direction of the Z axis (the direction of the optical axis O) corresponds to the backward direction. Accordingly, the upper plate spring 22 is called as a front spring, and the lower plate spring 24 is called as a rear spring.

As shown in Fig. 3, the yoke 20 is formed in an octagonal cylindrical shape. The octagonal cylindrical shape of the yoke 20 is formed by four long side members opposed to each other and four short side members disposed between the four long side members. Accordingly, the driving coil 16 is formed in an octagonal cylindrical shape in accordance with the shape of the octagonal cylindrical yoke 20. The permanent magnet 18 is formed by eight rectangular permanent magnet pieces 182 disposed on each side member of the octagonal cylindrical yoke 20. The yoke 20 includes an octagonal cylindrical outer casing portion 202 and an octagonal ring end 204 provided on the upper end (front end) of the outer casing portion 202.

The permanent magnet 18 is disposed on the inner peripheral surface of the outer casing portion 202 of the yoke 20 so as to have a gap with respect to the driving coil 16.

The upper plate spring (front spring) 22 is disposed on the upper side (front side) of the lens holder 14 in the direction of the optical axis O, and the lower plate spring (rear spring) 24 is disposed on the lower side (rear side) of the lens holder 14 in the direction of the optical axis O. The upper plate spring (front spring) 22 and the lower plate spring (rear spring) 24 have the substantially same configuration as each other. That is, the upper plate spring (front spring) 22 includes an inner peripheral end 222 attached to the lens holder 14 and an outer peripheral end 224 attached to the yoke 20. Three arm portions are provided between the inner peripheral end 222 and the outer peripheral end 224. Each of the arm portions is used to connect the inner peripheral end 222 to the outer peripheral end 224.

In the same manner, the lower plate spring (rear spring) 24 includes an inner peripheral end 242 attached to the lens holder 14 and an outer peripheral end 244 attached to the yoke 20. Three arm portions are provided between the inner peripheral end 242 and the outer peripheral end 244. Each of the arm portions is used to connect the inner peripheral end 242 to the outer peripheral end 244.

Additionally, the inner peripheral end is called as an inner ring, and the outer peripheral end is called as an outer ring.

The inner peripheral end 222 of the upper plate spring (front spring) 22 is sandwiched between the lens holder 14 and a stopper 26 so as to be fixed therebetween. In other words, the stopper 26 is fitted to the lens holder 14 so that the inner peripheral end 222 of the upper plate spring (front spring) 22 is sandwiched between the lens holder 14 and the stopper 26. On the other hand, the outer peripheral end 224 of the upper plate spring (front spring) 22 is sandwiched between the yoke 20 and a cover 28 so as to be fixed therebetween.

The stopper 26 has functions described below. That is, the stopper 26 has a function of allowing the inner peripheral end 222 of the upper plate spring (front spring) 22 to be highly precisely adhered to the lens holder 14 without a deviation. Accordingly, it is possible to improve a deviation of a VCM (voice coil motor) characteristic. Also, the stopper 26 has a function of improving an adhering strength of the upper plate spring (front spring) 22. Accordingly, it is possible to improve an impact resistance of the lens driving apparatus 10. Also, the stopper 26 has a function of preventing a deformation of the upper plate spring (front spring) 22 when a drop impact occurs in the lens driving apparatus 10. Accordingly, it is possible to also improve the impact resistance of the lens driving apparatus 10. Also, the stopper 26 has a function of determining a mechanical stroke of the lens driving apparatus 10.

Additionally, as described below, in this embodiment, the stopper 26 has a function of preventing a rotation of the lens holder 14.

On the other hand, the outer peripheral end 244 of the lower plate spring (rear spring) 24 is fixed to the yoke 20 via a spacer 30. In other words, the spacer 30 and the outer peripheral end 244 of the lower plate spring (rear spring) 24 are sandwiched between the yoke 20 and the actuator base 12 so as to be fixed therebetween. The inner peripheral end 242 of the lower plate spring (rear spring) 24 is fixed to a position on the side of the lower end (rear end) of the lens holder 14.

An inner peripheral wall of the cylindrical portion 140 of the lens holder 14 is provided with a female screw 142. On the other hand, although it is not shown in the drawings, an outer peripheral wall of the lens assembly (barrel) is provided with a male screw threaded into the female screw 142. Accordingly, it is possible to mount the lens assembly (barrel) to the lens holder 14 in such a manner that the lens assembly (barrel) is threaded into the cylindrical portion 140 of the lens holder 14 in the direction of the optical axis O while being rotated about the optical axis O, the lens assembly (barrel) is accommodated in the lens holder 14, and then the lens assembly and the lens holder 14 are adhered to each other by means of an adhesive or the like.

At this time, the lens holder 14 may be rotated together, but in this invention, as described below, the lens holder 14 is completely prevented from being rotated.

When a current is supplied to the driving coil 16 so as to cause an interaction between a magnetic field of the permanent magnet 18 and a magnetic field formed by the current flowing through the driving coil 16, an electromagnetic force is generated. Therefore, it is possible to adjust a position of the lens holder 14 (lens assembly) in the direction of the optical axis O.

A sheet-shaped electrode 32 is disposed between the lower plate spring (rear spring) 24 and the base 12. The sheet-shaped electrode 32 is used to supply a power to the driving coil 16. Additionally, an upper end (front end) of the cover 28 is provided with a plate 34 having an opening 34a.

As shown in the above-described embodiment, the stopper 26 includes two U-shaped rotation preventing-restraining portions 262 which are provided at symmetric positions corresponding to a rotation of two times by 180° with respect to the optical axis O. The U-shaped rotation preventing-restraining portions 262 are used as rotation preventing members for completely preventing the lens holder 14 from being rotated upon mounting the lens assembly to the cylindrical portion 140 of the lens holder 14. That is, upon mounting the lens assembly to the cylindrical portion 140 of the lens holder 14, it is possible to completely prevent the lens holder 14 from being rotated in such a manner that a jig (not shown) is inserted to the two U-shaped rotation preventing-restraining portions 262 to be held therein. At this time, a clearance between the stopper 26 and the cover 28 is ensured (maintained).

The sheet-shaped electrode 32 includes an electrode portion 322 which is electrically connected to a pair of drawn wires 162 of the driving coil 16 and an extension portion 324 which extends downward from the electrode portion 322 and has a pair of lens driving terminals 324a formed at the front end. The lens holder 14 includes plural spring separation preventing guides 144 which prevent a separation of the lower plate spring 24. Each of the spring separation preventing guides 144 includes a drawn hole (not shown) used to draw out the pair of drawn wires 162. Accordingly, the pair of drawn wires 162 of the driving coil 16 is drawn out via the drawn hole of the spring separation preventing guide 144. The front end of the pair of drawn wires 162 is soldered to a terminal portion (not shown) formed at the electrode portion 322.

On the other hand, the actuator base 12 is monolithically formed with a guide 122 which protrudes downward and has a through-hole 122a (see Fig. 5) used for an insertion operation of the extension portion 324. As shown in Figs. 1 and 2, the pair of lens driving terminals 324a is exposed from the lower end of the guide 122. Accordingly, the extension portion 324 of the sheet-shaped electrode 32 is drawn out along the guide 122 of the actuator base 12.

Likewise, since the actuator base 12 is monolithically formed with the guide 122, it is possible to reduce the number of components. Additionally, since the pair of lens driving terminals 324a is exposed from the lower end of the guide 122, it is possible to reliably connect the lens driving terminal 324a to a substrate 42 (see Fig. 4) so as to be electrically connected to each other.

- Next, a camera module 40 having the lens driving apparatus 10 shown in Fig. 1 will be described with reference to Figs. 4 and 5. Fig. 4 is an external perspective view showing the camera module 40 when obliquely viewed from the upside. Fig. 5 is a cross-sectional view magnifying an electric connection portion (contact point portion) of the lens driving terminal 324a shown in Fig. 4.

The camera module 40 includes the substrate 42, an imaging element (not shown) which is mounted (placed) onto an upper surface 42a of the substrate 42, plural electronic components (not shown) which are mounted (placed) onto the upper surface 42a of the substrate 42 with a gap with respect to the imaging element, and a sealing member 44 which forms a closed space, used for sealing the imaging element and the plural electronic components, in combination with the substrate 42. The lens driving apparatus 10 is placed on the sealing member 44.

As shown in Fig. 5, the substrate 42 has a conductive pattern 422 such as a copper pattern formed on the upper surface 42a so as to be electrically connected to the pair of lens driving terminals 324a via a conductive resin 52. As for the conductive resin 52, a thermosetting resin such as an epoxy-base resin is used as a base material.

A solder is used for the electric connection between the pair of lens driving terminals 324a and the conductive pattern 422 of the substrate 42. In this case, since a soldering iron is maintained at a high temperature not less than 300°C, a thermal stress is applied to the component, thereby damaging the component. Additionally, a deviation occurs in an external appearance by an operator.

On the contrary, in this embodiment, since the conductive resin 52 is used for the electric connection between the pair of lens driving terminals 324a and the conductive pattern 422 of the substrate 42, it is possible to reliably connect the lens driving terminal 324a to the conductive pattern 422 of the substrate 42 so as to be electrically connected to each other. Additionally, since the pair of lens driving terminals 324a is disposed on the inside of the camera module 40 instead of the outer surface of the camera module 40, it is advantageous in that an external damage (a drop, an impact, and a short circuit to other components) does not occur. Further, it is possible to prevent a deviation in application amount by applying the conductive resin 52 by means of a dispenser.

As shown in Fig. 4, an electric connection portion (contact point portion) between the pair of lens driving terminals 324a and the conductive pattern 422 of the substrate 42 is formed in a box shape. In other words, a space which has substantially rectangular parallelepiped shape is defined by a bottom surface of the guide 122, the upper surface 42a of the substrate 42, and the lens driving terminals 324a. Accordingly, since an application area is apparent upon applying the conductive resin 52, it is possible to improve workability. Additionally, the electric connection portion (contact point portion) is formed in a box shape in the inside of the camera module 40. For this reason, an external appearance is not limited by the electric connection portion. Further, an external appearance of the camera module 40 is tidy.

As shown in Fig. 4, the lens driving apparatus 10 is formed in a substantially rectangular parallelepiped shape, and the substrate 42 is formed in a rectangular shape in correspondence to the rectangular parallelepiped shape. Accordingly, it is possible to realize a decrease in size of the camera module 40.

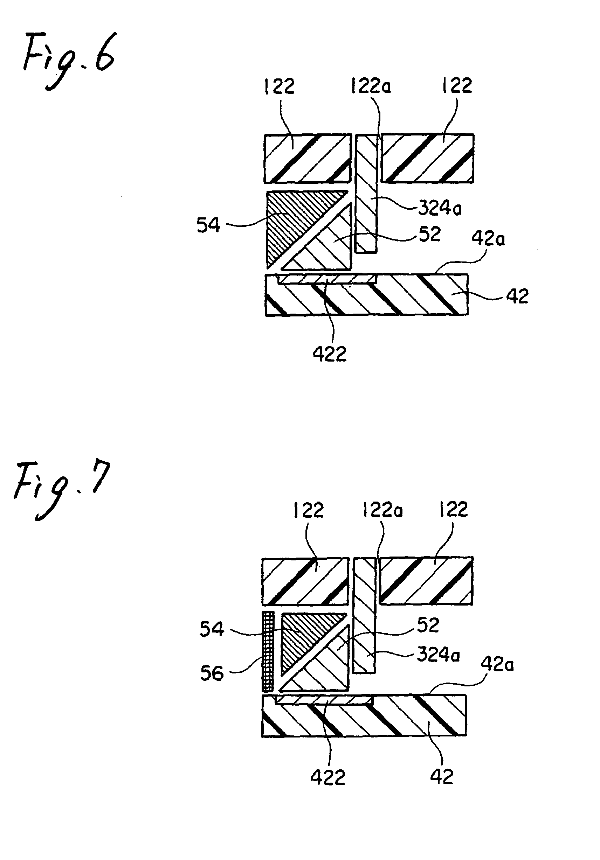

The electric connection portion (contact point portion) of the lens driving terminal 324a according to a second embodiment of the invention will be described with reference to Fig. 6.

In the embodiment shown in the drawing, a heat radiation resin 54 which is made of silicon resin is applied to the box-shaped contact point portion. That is, the heat radiation resin 54 is applied to the conductive resin 52.

With such a structure, it is possible to suppress a heat occurrence of the driving coil 16 or the lens assembly. Additionally, it is possible to prevent an external electric damage (short).

The electric connection portion (contact point portion) of the lens driving terminal 324a according to a third embodiment of the invention will be described with reference to Fig. 7.

In the embodiment shown in the drawing, a conductive plate 56 such as a metal plate is used as a lid for covering the box-shaped contact point portion. That is, the conductive plate 56 covers the heat radiation resin 54. As the conductive plate (metal plate) 56, for example, a copper plate, a white metal plate, or the like may be used.

Likewise, since the box-shaped contact point portion is covered by the conductive plate 56 serving as the lid, it is possible to cope with noise or unnecessary radiation.

Additionally, in the embodiment shown in Fig. 7, the heat radiation resin 54 is covered by the conductive plate 56. However, as shown in Fig. 5, in the case where the heat radiation resin 54 is not provided, the conductive plate 56 may be used to cover the conductive resin 52 with a gap with respect to the conductive resin 52.

As described above, the exemplary embodiments of the invention are described, but may be, of course, modified into various forms by the person skilled in the art without departing from the spirit of the invention.

## Claims

1. A lens driving apparatus comprising:
a lens holder having a cylindrical portion adapted to hold a lens assembly;
a driving coil fixed to the lens holder so as to be positioned in a circumference of the cylindrical portion;
a yoke having a permanent magnet opposed to the driving coil; and
an upper plate spring and a lower plate spring provided on both sides of the cylindrical portion of the lens holder in an optical axis direction of the cylindrical portion and movably supporting the lens holder in the optical axis direction in a state where the lens holder is positioned in a radial direction of the cylindrical portion,
wherein each of the upper plate spring and the lower plate spring has an inner peripheral end attached to the lens holder and an outer peripheral end attached to the yoke;
wherein the lens driving apparatus further comprises:
a base which is attached with the yoke and sandwiches the outer peripheral end of the lower plate spring between the yoke and the base; and
a sheet-shaped electrode which is disposed between the lower plate spring the base and operable to supply a power to the driving coil;
wherein the sheet-shaped electrode has:
an electrode portion which is electrically connected to a pair of drawn wires of the driving coil; and
an extension portion which extends downward from the electrode portion and has a pair of lens driving terminals formed at a front end thereof;
wherein the base is monolithically formed with a guide which protrudes downward and has a through-hole through which the extension portion is inserted; and
wherein the pair of lens driving terminals is exposed from a lower end of the guide.

2. A camera module comprising:
the lens driving apparatus as set forth in claim 1;
an imaging element; and
a substrate on which the lens driving apparatus and the imaging elements are mounted,
wherein the substrate is formed with a conductive pattern which is electrically connected to the pair of lens driving terminals via a conductive resin.

3. The camera module as set forth in claim 2, further comprising a heat radiation resin which is applied to the conductive resin.

4. The camera module as set forth in claim 3, further comprising a conductive plate which covers the heat radiation resin.

5. The camera module as set forth in claim 2, further comprising a conductive plate which is spaced apart from the conductive resin and covers the conductive resin.

6. The camera module as set forth in any one of claims 2 to 5, wherein the lens driving apparatus is formed into a substantially rectangular parallelepiped shape and the substrate is formed into a rectangular shape in correspondence to the rectangular parallelepiped shape.
